# EUROPÄISCHE PATENTANMELDUNG

(11) **EP 1 467 567 A2**
(43) Veröffentlichungstag der Anmeldung: **13.10.2004**
(21) Anmeldenummer: 04003568.5
(22) Anmeldetag: 18.02.2004
(51) Int. Cl.: H04N 7/24

(54) **Verfahren zur spontanen Übertragung von audio-visuellen Nachrichten an Empfängergruppen**

(30) Priorität: 11.04.2003 DE 10316848
(71) Anmelder: Deutsche Telekom AG, 53113 Bonn (DE)
(72) Erfinder: Abecker, Heiko, Dipl.-Ing., 64287 Darmstadt (DE); Gross, Bernhard, Dr., 64521 Gross-Gerau (DE); Irgenfried, Stephan, Dipl.-Ing., 94474 Vilshofen (DE); Ruppel, Wolfgang, Dr., 60435 Frankfurt (DE); Sonthof, Oliver, 65428 Rüsselsheim (DE)

(57) **Zusammenfassung**

Bei einem Verfahren zur Übertragung von audio-visuellen Nachrichten über ein digitales Rundfunknetz ist vorgesehen, dass die audio-visuellen Nachrichten einschließlich eventueller zusätzlicher Informationen als Nutzlast von Datenpaketen im Internet-Protokoll-(IP)-Format innerhalb eines mit dem jeweiligen Rundfunknetz kompatiblen Transportformates übertragen werden. Vorzugsweise wird der Transport der Signale nach dem MPEG-Standard und dem DVB-Multiprotokoll-Encapsulation-Standard gebildet, wobei die Codierung der Nachricht nach dem SMIL-Standard in der Variante HTML+Time erfolgt.

## Beschreibung

Die Erfindung betrifft ein Verfahren zur Übertragung von audio-visuellen Nachrichten über ein digitales Rundfunknetz.

Zur Verbreitung von audio-visuellen Nachrichten sind dafür vorgesehene Rundfunknetzwerke besonders gut geeignet. Einerseits verfügen sie über eine ausreichende Bandbreite. Andererseits sind diese Netzwerke inhärent für die Verteilung von Nachrichten geeignet. Eine gezielte Übertragung an vorgegebene Abonnenten mit unterschiedlich leistungsfähigen Endgeräten sowie ein sporadisches Erstellen derartiger Nachrichten ist jedoch mit den derzeit bekannten Systemen problematisch.

Aufgabe der vorliegenden Erfindung ist es daher, audio-visuelle Nachrichten derart zu übertragen, dass sie in einfacher Weise erstellt und in einem angepassten Format an ausgewählte Abonnenten - falls erforderlich jedoch auch an alle dafür ausgewählte Empfänger - verteilt werden können.

Diese Aufgabe wird mit dem erfindungsgemäßen Verfahren dadurch gelöst, dass die audio-visuellen Nachrichten einschließlich eventueller zusätzlicher Informationen als Nutzlast von Datenpaketen im Internet-Protokoll-(IP)-Format innerhalb eines mit dem jeweiligen Rundfunknetz kompatiblen Transportformates übertragen werden. Dabei kommt als digitales Rundfunknetz vorzugsweise ein DVB-T-Netz in Frage. Die Erfindung ist jedoch auch für andere digitale Netze bzw. Verfahren geeignet, wie beispielsweise DAB.

Vorzugsweise ist bei dem erfindungsgemäßen Verfahren vorgesehen, dass der Transport der Signale nach dem MPEG-Standard und dem DVB-Multiprotokoll-Encapsulation-Standard gebildet wird. Die Adressierung der Empfängergruppen erfolgt dabei mit Hilfe der IP-Multicast-Technik. Dies hat den Vorteil, dass bekannte Einrichtungen zur Übertragung und zum Empfang von digitalen Videosignalen benutzt werden können. Ferner können beim Empfang bekannte Verfahren in vorteilhafter Weise verwendet werden, wenn die Codierung der Nachricht nach dem SMIL-Standard in der Variante HTML+Time erfolgt.

Eine andere Weiterbildung des erfindungsgemäßen Verfahrens besteht darin, dass als zusätzliche Informationen Text und Animation vorgesehen sind. Zur vorteilhaften Erstellung der audio-visuellen Nachrichten kann gemäß einer anderen Weiterbildung vorgesehen sein, dass die zu übertragenden audio-visuellen Nachrichten an einem Editierplatz zusammengestellt und SMIL-codiert in einem Server abgelegt werden und dass die abgelegten audio-visuellen Nachrichten als kompatibler Transportstrom über das Rundfunknetz gesendet werden.

Zur Selektion ausgewählter Empfänger, die beispielsweise die jeweiligen Nachrichten abonniert haben, kann bei dem erfindungsgemäßen Verfahren vorgesehen sein, dass in die audio-visuelle Nachricht eine Typkennung eingefügt wird. Diese Typkennung kann beispielsweise Nachrichten, Sportmeldungen oder andere Arten von Nachrichten oder Unterhaltung kennzeichnen.

Als Empfänger kommen verschiedene Arten von Computern in Frage, beispielsweise Personalcomputer, Notebooks und sogenannte Pocket-PCs. Da zwischen diesen Empfängern große Unterschiede bezüglich ihrer Betriebssysteme und Ausstattung mit Anwenderprogrammen vorliegen, ist bei einer vorteilhaften Ausgestaltung der Erfindung vorgesehen, dass in die audio-visuelle Nachricht eine Kennung über die Art des jeweiligen Empfängers eingefügt wird.

Um trotz hoher Netzauslastung spontan audio-visuelle Nachrichten mit dem erfindungsgemäßen Verfahren übertragen zu können, kann ferner bei dem erfindungsgemäßen Verfahren vorgesehen sein, dass die Datenrate der audio-visuellen Nachrichten und/oder anderer über das digitale Rundfunknetz übertragener Nachrichten in Abhängigkeit von der Auslastung des Rundfunknetzes gesteuert werden.

Ein hierfür geeignetes Verfahren zur Steuerung der Menge der über ein digitales Rundfunknetz übertragenen Daten ist im Rahmen des von der europäischen Union geförderten Projektes MAMBO (Multi Services Management Wireless Network with Bandwidth Optimisation) bekannt geworden und beispielsweise in IST-2000-26298 Deliverable D7.2 Measurement and Management of Quality of Service beschrieben worden.

Die Erfindung umfasst ferner ein Verfahren zum Empfang von audio-visuellen Nachrichten über ein digitales Rundfunknetz, die einschließlich eventueller zusätzlicher Informationen als IP-Pakete innerhalb eines mit dem Rundfunknetz kompatiblen Transportstromes eintreffen, bei dem vorgesehen ist, dass der Transportstrom daraufhin überwacht wird, ob IP-Pakete mit multimedialen Nachrichten vorhanden sind, die dann mit Hilfe der standardmäßig auf einem Rechner vorhandenen Anwendungsprogramme Internet-Browser und Medienabspieler decodiert und auf einem Bildschirm angezeigt werden.

Ausführungsbeispiele der Erfindung sind in der Zeichnung anhand mehrerer Figuren dargestellt und in der nachfolgenden Beschreibung näher erläutert. Es zeigt:
Fig. 1 ein Blockschaltbild der zur erfindungsgemäßen Übertragung von audio-visuellen Nachrichten dienenden Einrichtungen,
Fig. 2 ein ebenfalls als Blockschaltbild dargestelltes weiteres Ausführungsbeispiel,
Fig. 3 eine Darstellung von Komponenten zur Erstellung der audio-visuellen Nachrichten,
Fig. 4 eine schematische Darstellung einer audio-visuellen Nachricht,
Fig. 5 ein Flussdiagramm zur empfängerseitgen Selektion von audio-visuellen Nachrichten und
Fig. 6 ein Flussdiagramm zur Erstellung einer audio-visuellen Nachricht.

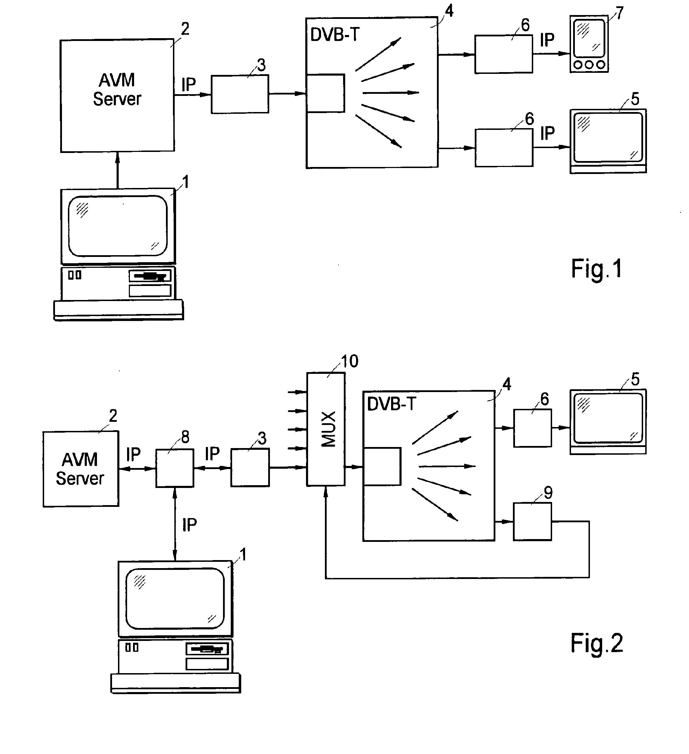

Im Zusammenhang mit den Ausführungsbeispielen wird die audio-visuelle Nachricht als AVM (= adhoc video message) bezeichnet, wobei der Bestandteil adhoc darauf hindeutet, dass die AVM ohne bestimmte vorherige Verabredung mit dem Empfänger zu beliebiger Zeit gesendet werden kann. Mit Hilfe eines Editors 1 (Fig. 1) wird eine neue AVM in einem Format SMIL (= synchronised multi media integration language) des World Wide Web Consortiums (W3C) erstellt und in eine Datenbank eines AVM-Servers 2 geladen. Die Erstellung und das Laden in den AVM-Server 2 kann mit Hilfe eines benutzerfreundlichen web-basierten AVM-Editierwerkzeugs (authoring tool) erfolgen. Geeignete Programme - im folgenden AVM-Manager genannt - sorgen dafür, dass die AVM direkt nach dem Laden oder zu einer vorprogrammierten Zeit gesendet wird. Dazu wird die zunächst nach dem Internet-Protokoll paketierte AVM bei 3 in einen Transportstrom nach der DVB-Norm eingebunden und einem Rundfunknetz 4 zugeführt, das die AVM Empfängern zugänglich macht. Einer davon ist als Personalcomputer 5 dargestellt, der über ein entsprechendes Empfangsteil 6 verfügt. Ferner kann beispielsweise ein PDA (personal digital assistant) 7 vorgesehen sein.

Bei dem Ausführungsbeispiel nach Fig. 2 sind der Editor 1, der AVM-Server 2 sowie die Einrichtung 3 über einen IP-Switch 8 miteinander verbunden. Da außer AVM noch andere Dienste auf das Rundfunknetz 4 zugreifen, kann es vorkommen, dass die Kapazität des Rundfunknetzes an Grenzen stößt. Um dennoch eine Übertragung zu ermöglichen, wird bei dem Ausführungsbeispiel nach Fig. 2 auf das MAMBO-System zurückgegriffen, das in IST-2000-26298 Deliverable D7.2 Measurement and Management of Quality of Service beschrieben ist. Dieses besteht im Wesentlichen aus einem Monitor 9, der die Qualität eines über das Rundfunknetz ausgesandten audiovisuellen Signals überwacht und über einen MAMBO-Multiplexer 10 den Zugriff auf das Rundfunknetz 4 durch eine dynamische Änderung der Mischung der verschiedenen Dienste steuert, so dass vorübergehend genug Bandbreite für AVM zur Verfügung steht.

Die zentrale Komponente des Systems ist der AVM-Server, der im Wesentlichen fünf Software-Komponenten enthält, nämlich einen Web-Server, eine Datenbank, einen Video-Server, ein AVM-Erstellungswerkzeug und einen AVM-Manager.

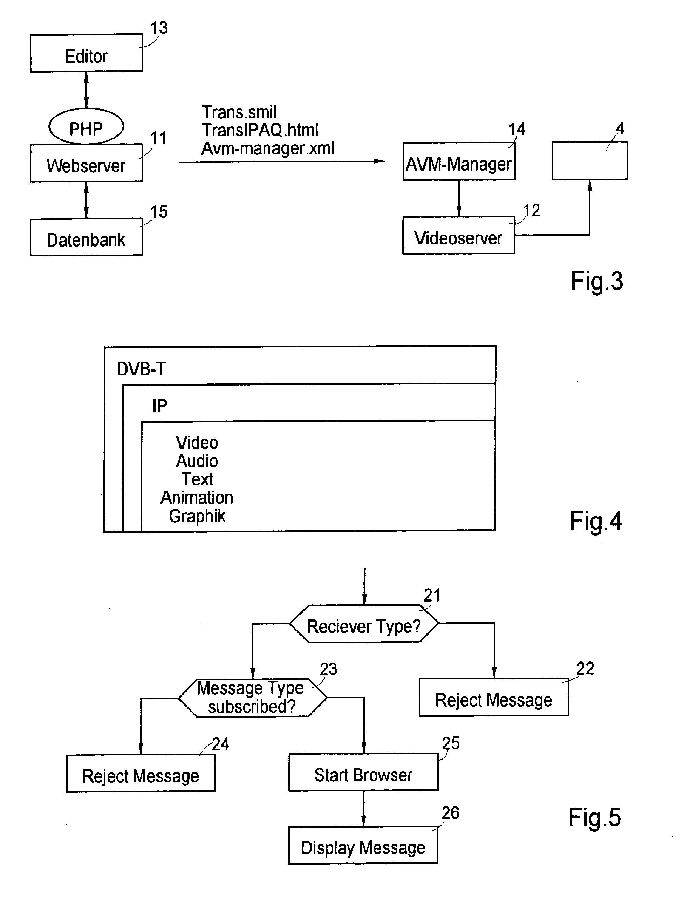

Diese Elemente können in einem einzigen Host implementiert sein oder auf mehreren Hosts, die über ein IP-Netzwerk miteinander verbunden sind. Jedoch sollten der AVM-Manager und der Web-Server auf dem gleichen Host laufen wegen Zugriffsbeschränkungen auf Dateien. Alle Teile kommunizieren über TCP/IP miteinander. Fig. 3 zeigt eine Übersicht hierzu. Die Implementation des AVM-Servers 2 (Fig.2) basiert auf einem MS-Windows-2000-Advanced-Server mit integriertem Web-Server 11 und einem Video-Server 12. Bei dem Beispiel wurde zur Implementierung der Editor-Software 13 die Script-Sprache PHP (= hypertext processor) mit einem Zugriff auf eine MySQL-Datenbank 15 gewählt. PHP und MySQL sind kostenlos im Quelltextformat verfügbar. Der AVM-Manager 14 ist in der Programmiersprache C implementiert und läuft ebenfalls auf dem Windows-2000-Server.

Der AVM-Editor 13 dient zum Codieren der AVM-Nachrichten in das W3C SMIL-Format als Datei Trans.smil und zusätzlich als Datei TransIPAQ.html im HTML-Format für Empfänger, die keine für das SMIL-Format geeignete Software aufweisen. Mit Hilfe der PHP-AVM-Erstellungs-Software ist ein Speichern der audio-visuellen Nachricht im Video-Server 12 möglich. Der Zeitpunkt der Ausstrahlung der AVM-Nachricht, die Referenzen auf die im Server gespeicherten Ressourcen sowie die Kategorie der Nachricht werden mit Hilfe einer XML-Datei asynchron vom AVM-Editor an den AVM-Manager übermittelt. Beim Empfänger - auch AVM-client genannt - wird lediglich ein geeigneter Internet-Browser einschließlich eines Multimedia-Wiedergabe-Programms benötigt und ein Programm-Modul, das im folgenden AVM-Daemon genannt wird.

Fig. 4 zeigt schematisch die Nachricht im DVB-Format mit dem eingeschlossenen IP-Paket, das wiederum verschiedene Komponenten wie Video, Audio, Text und Animation enthält.

Fig. 5 zeigt ein Flussdiagramm eines AVM-Daemons, das für einen sogenannten Pocket-PC vorgesehen ist. Die einkommende Nachricht wird bei 21 daraufhin geprüft, für welchen Empfängertyp sie vorgesehen ist. Ist sie für einen PC vorgesehen, wird die Nachricht bei 22 zurückgewiesen. Ist sie jedoch durch ihre Typkennzeichnung als für einen Pocket-PC vorgesehen erkennbar, wird bei 23 abgefragt, ob die Nachricht demjenigen Typ entspricht, der abonniert wurde. Ist dies nicht der Fall, wird die Nachricht bei 24 zurückgewiesen. Ist dies jedoch der Fall, wird bei 25 der Browser gestartet, worauf bei 26 die Wiedergabe erfolgt.

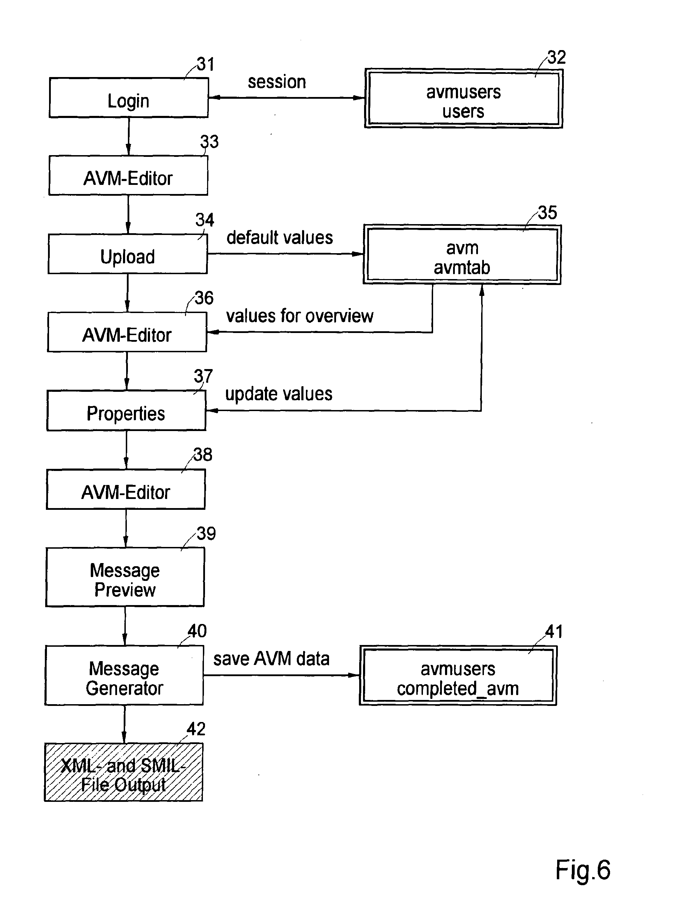

Fig. 6 zeigt ein Flussdiagramm zur Erstellung einer AVM. Die doppelt umrandeten Blöcke stellen Tabellen in der MySQL-Datenbank dar, während der schraffierte Block einen Schreibvorgang bedeutet. Die anderen Blöcke entsprechen PHP-Scripts. Bei 31 erfolgt ein Login. Dabei ist eine Authentifikation beispielsweise durch Eingabe des Benutzernamens und eines Passwortes erforderlich, die in der Tabelle users der Datenbank avmusers 32 gespeichert sind. Danach wird bei 33 der AVM-Editor gestartet, der bei 34 die Adresse URL einer audio-visuellen Datei als zentralen Teil der AVM in die Datenbank avm 35, Tabelle avmtab lädt. Die Aufnahme des audio-visuellen Clips einschließlich der Nachbearbeitung ist bereits vorher erfolgt. Eine gewisse Nachbearbeitungsfunktionalität kann jedoch auch im AVM-Editor vorgesehen sein, beispielsweise SMIL-Blend- und Übergangseffekte. Nach dem Laden der URL kann mit dem Editor bei 36 zusätzliche Information bei 37 in Textform oder graphischer Form eingegeben werden, die in zeitlicher Beziehung zu dem audio-visuellen Clip steht. Außerdem kann beispielsweise eine Trailer-Animation hinzugefügt werden als Ankündigung der neuen AVM.

Wenn die Erstellung der AVM abgeschlossen ist, kann mit Hilfe des Editors bei 38 und 39 eine Vorschau vorgenommen werden, worauf bei 40 die fertige AVM generiert wird und in die Datenbank avmusers in der Tabelle completed_avm eingetragen wird (41). Die fertige AVM wird dann als XMLund SML-Datei bei 42 ausgegeben.

Im folgenden ist ein Beispiel einer Codierung einer vollständigen AVM wiedergegeben:

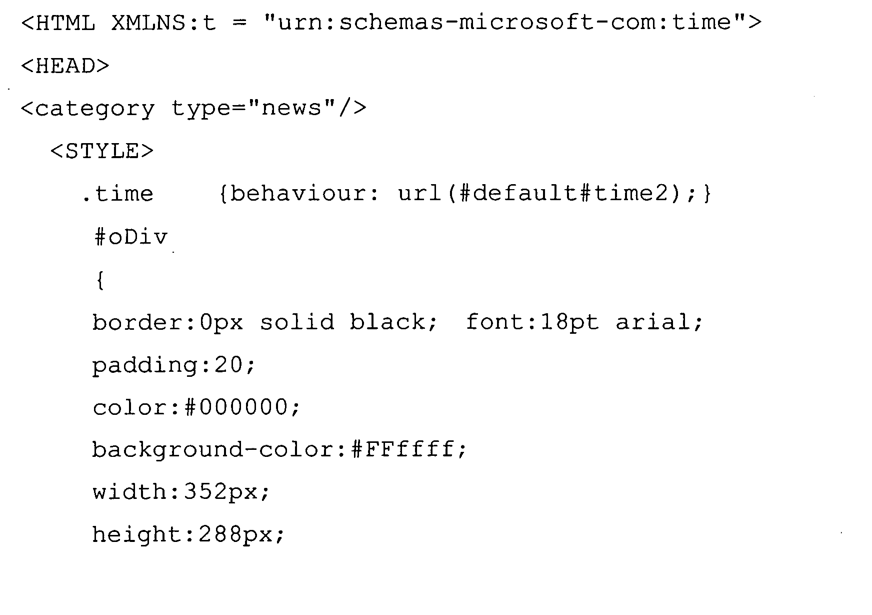

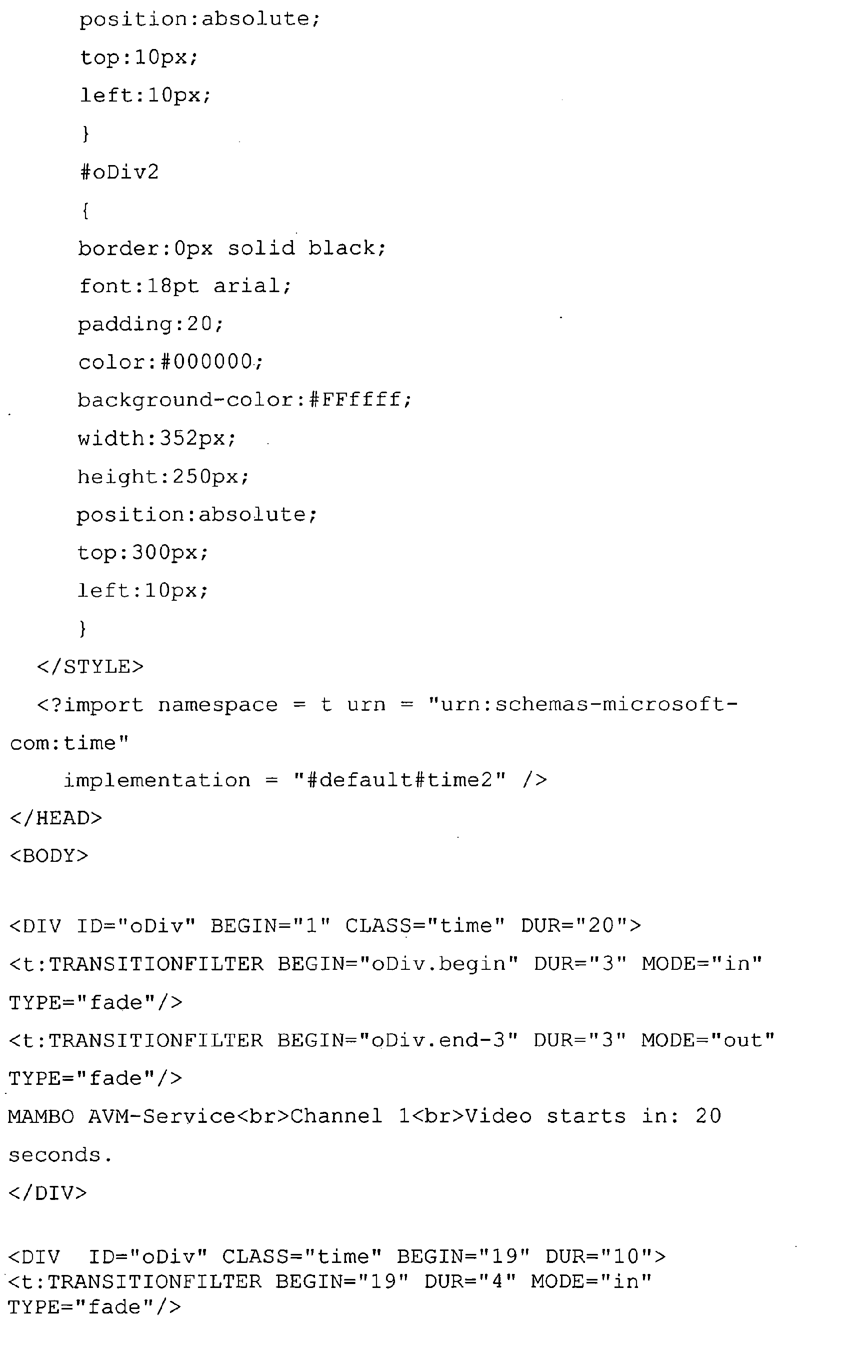

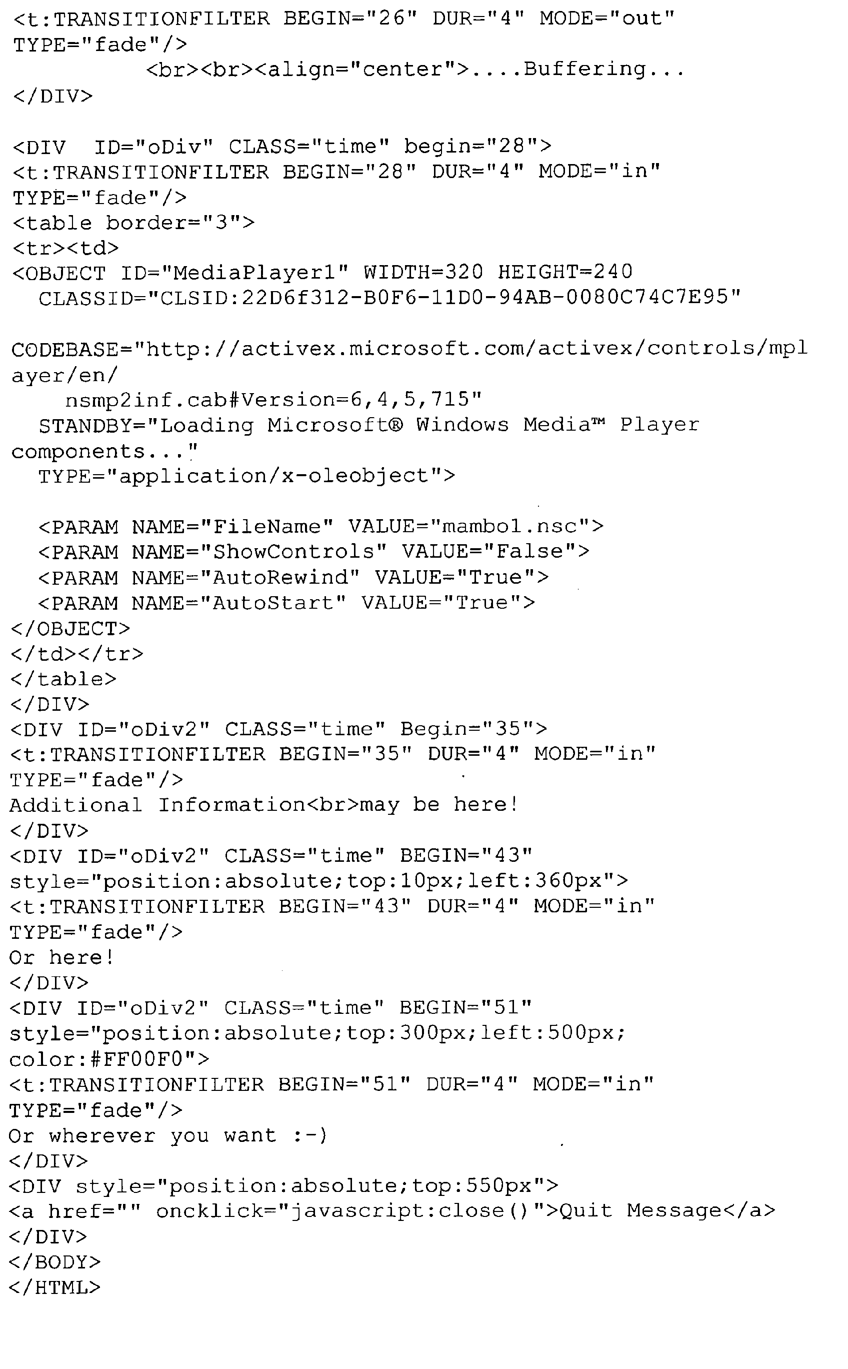

## Patentansprüche

1. Verfahren zur Übertragung von audio-visuellen Nachrichten über ein digitales Rundfunknetz, **dadurch gekennzeichnet, dass** die audio-visuellen Nachrichten einschließlich eventueller zusätzlicher Informationen als Nutzlast von Datenpaketen im Internet-Protokoll-(IP)-Format innerhalb eines mit dem jeweiligen Rundfunknetz kompatiblen Transportformates übertragen werden.

2. Verfahren nach Anspruch 1, **dadurch gekennzeichnet, dass** der Transport der Signale nach dem MPEG-Standard und dem DVB-Multiprotokoll-Encapsulation-Standard gebildet wird.

3. Verfahren nach einem der Ansprüche 1 oder 2, **dadurch gekennzeichnet, dass** die Codierung der Nachricht nach dem SMIL-Standard in der Variante HTML+Time erfolgt.

4. Verfahren nach einem der vorhergehenden Ansprüche, **dadurch gekennzeichnet, dass** als zusätzliche Informationen Text und Animation vorgesehen sind.

5. Verfahren nach einem der vorhergehenden Ansprüche, **dadurch gekennzeichnet, dass** die zu übertragenden audio-visuellen Nachrichten an einem Editierplatz zusammengestellt und SMIL-codiert in einem Server abgelegt werden und dass die abgelegten audio-visuellen Nachrichten als kompatibler Transportstrom über das Rundfunknetz gesendet werden.

6. Verfahren nach einem der vorhergehenden Ansprüche, **dadurch gekennzeichnet, dass** in die audio-visuelle Nachricht eine Typkennung eingefügt wird.

7. Verfahren nach einem der vorhergehenden Ansprüche, **dadurch gekennzeichnet, dass** in die audio-visuelle Nachricht eine Kennung über die Art des jeweiligen Empfängers eingefügt wird.

8. Verfahren nach einem der vorhergehenden Ansprüche, **dadurch gekennzeichnet, dass** die Datenrate der audio-visuellen Nachrichten und/oder anderer über das digitale Rundfunknetz übertragener Nachrichten in Abhängigkeit von der Auslastung des Rundfunknetzes gesteuert werden.

9. Verfahren zum Empfang von audio-visuellen Nachrichten über ein digitales Rundfunknetz, die einschließlich eventueller zusätzlicher Informationen als IP-Pakete innerhalb eines mit dem Rundfunknetz kompatiblen Transportstromes eintreffen, bei dem vorgesehen ist, dass der Transportstrom daraufhin überwacht wird, ob IP-Pakete mit multimedialen Nachrichten vorhanden sind, die dann mit Hilfe der standardmäßig auf einem Rechner vorhandenen Anwendungsprogramme Internet-Browser und Medienabspieler decodiert und auf einem Bildschirm angezeigt werden.
